# EUROPÄISCHE PATENTSCHRIFT

(11) **EP 3 034 977 B1**
(45) Veröffentlichungstag und Bekanntmachung des Hinweises auf die Patenterteilung: **15.05.2019**
(21) Anmeldenummer: 15197315.3
(22) Anmeldetag: 01.12.2015
(51) Int. Cl.: F28D 20/02

(54) **LATENTWÄRMESPEICHER**
LATENT HEAT RESERVOIR
ACCUMULATEUR THERMIQUE LATENT

(30) Priorität: 17.12.2014 DE 102014226198
(43) Veröffentlichungstag der Anmeldung: 22.06.2016
(73) Patentinhaber: Vaillant GmbH, 42859 Remscheid (DE)
(72) Erfinder: Wegner, Alexander, 45881 Gelsenkirchen (DE)
(74) Vertreter: Popp, Carsten

(56) Entgegenhaltungen:
- EP-A2- 2 482 021
- CH-A5- 630 170
- DD-A1- 269 209
- DE-A1- 3 011 839
- DE-A1- 10 108 150
- DE-A1-102008 029 972
- DE-U1- 29 908 469

## Beschreibung

Die Erfindung bezieht sich auf einen Latentwärmespeicher.

Bei Latentwärmespeichern mit Salzhydraten als Phasenwechselmaterialien werden häufig Wärmeüberträger aus Kunststoff (zum Beispiel PP oder PE) eingesetzt, da diese Phasenwechselmaterialien korrosiven Eigenschaften gegenüber Metallen aufweisen. Als Speicherbehälter werden ebenfalls aus denselben Gründen häufig drucklose Kunststoffspeicher eingesetzt. Diese haben eine zumeist verschließbare Öffnung zum Druckausgleich mit der Umgebung. Bauteile aus Kunststoff sind nicht vollständig diffusionsdicht.

Die Patentschrift DD 269 209 A1 offenbart einen Latentwärmespeicher mit einem Wechsel zwischen Sieden und Kondensieren. Im Fall eines Überdruck so kann das gasförmige Medium in ein Auffanggefäß geleitet werden und dort kondensieren.

Die Patentanmeldung EP 2 482 021 A2 beschreibt ein Verfahren zur Bestimmung des Ladezustands eines Latentwärmespeichers. Das Verfahren macht sich die Tatsache zu Nutze, dass der Druck im Behälter abhängig ist von der Beladung des Latentwärmespeichermaterials. Dieser Druck wird mittels eines Druckmessgerätes und einer Messgaspumpe erfasst.

Aus der Patentanmeldung DE 30 11 839 A1 ist ein Behälter für Wasser als Latentwärmespeichermasse bekannt. Der untere Teil des Innenraums des Behälters ist mittels eines Verbindungsrohr mit einem Überlaufraum verbunden. Beim Gefrieren des Wassers im Behälter wird Wasser aus dem Behälter in den Überlaufraum verdrängt und beim Schmelzen wieder zurückgesaugt.

Das Gebrauchsmuster DE 299 08 469 U1 beschreibt einen Latentwärmespeicher mit außerhalb des Speichers angeordneten Wärmetauschern.

Die Patentanmeldung DE 101 08 150 A1 zeigt einen Letentwärmespeicher mit Ausgleichsbehälter.

Salzhydrate sind in der flüssigen Phase wässrige Lösungen. Der Dampfdruck ist geringer als der Dampfdruck von Wasser. Die Dampfdruckdifferenz bewirkt Diffusion von Wasser durch den Wärmetauscher des Heizkreises in das Latentwärmespeichermaterial. Bereits geringe Änderungen in der Wasserkonzentration bewirken einen deutlichen Abfall der latenten Speicherkapazität der PCM.

Es ist grundsätzlich möglich, den Wärmetauscher aus diffusionsdichten Materialien herzustellen oder den Kunststoff mit einer diffusionsdichten Schicht zu versehen. Dies ist aber aufgrund der komplexen Geometrie des Wärmetauschers und der großen Oberfläche aufwändig.

Neben der Wasserdampfdiffusion tritt auch Sauerstoffdiffusion durch Kunststoffe auf. Dies ist problematisch, da Sauerstoff nur in geringen Mengen in den Heizkreis gelangen darf (vergleiche DIN 4726 "Warmwasser-Flächenheizungen und Heizkörperanbindungen - Kunststoffrohr- und Verbundrohrleitungssysteme"). Besonders bei drucklosen Speichern wird Sauerstoff aus der Umgebungsluft vom Latentwärmespeichermaterial gelöst. Dieser Sauerstoff gelangt durch Diffusion durch den Wärmetauscher in den Heizkreis.

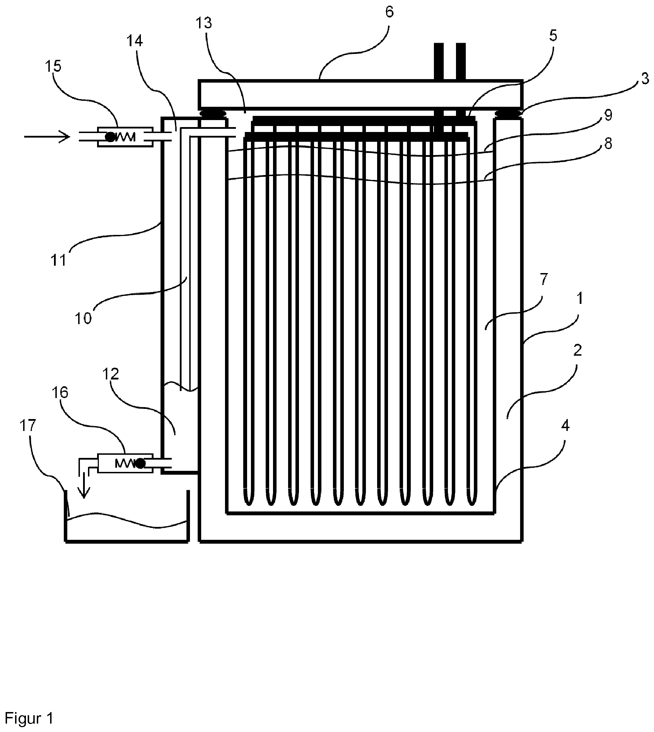

Die erfinderische Anordnung in Fig. 1 besteht aus einem mit Latentwärmespeichermaterial 7 gefüllten Speicher 1 mit einem integrierten Wärmetauscher 5. Der Speicher 1 ist von einem mittels Dichtung 3 abgedichteten Deckel 6 oben verschlossen und besitzt eine umlaufende Wärmedämmung 2, so dass das Latentwärmespeichermaterial 7 in einem Speicherinnenbehälter 4 angeordnet ist. Das Latentwärmespeichermaterial 7 ist im vorliegenden Fall ein Salzhydrat oder ein sonstiges wasserbasiertes Stoffsystem. Das Latentwärmespeichermaterial 7 ist im Speicherinnenbehälter 4 derart eingebracht, dass unterhalb des Deckels ein erstes Luftvolumen 13 vorliegt. Das Volumen des erstes Luftvolumens 13 variiert mit der Wärmeausdehnung des Latentwärmespeichermaterials 7 zwischen einem Minimalfüllstand 8 (bei minimaler Betriebstemperatur) und Maximalfüllstand 9 (bei maximaler Betriebstemperatur).

Neben dem Speicher 1 ist ein ungedämmter Druckausgleichsbehälter 11 angeordnet und über ein Verbindungsrohr 10 verbunden. Im Druckausgleichsbehälter 11 befindet sich am Boden Wasser 12. Darüber befindet sich im Druckausgleichsbehälter 11 ein zweites Luftvolumen 14. Am Kopf des Druckausgleichsbehälters 11 befindet sich ein erstes Rückschlagventil 15, am Boden des Druckausgleichsbehälters 11 befindet sich ein zweites Rückschlagventil 16; darunter ist ein Auffangbehälter 17 angeordnet. Die Rückschlagventile 15 und 16 haben einen definierten Öffnungsdruck.

Das Latentwärmespeichermaterial 7 verringert während des Erstarrens und Abkühlens im Anwendungsbereich sein Volumen um etwa 10%. Das Volumen schwankt daher im Betrieb je nach Zustand des Latentwärmespeichermaterials zwischen Minimalfüllstand 8 und Maximalfüllstand 9. Beim Aufheizen des Speichers schmilzt das Latentwärmespeichermaterial 7 und dehnt sich dabei aus. Hierdurch wird das erste Luftvolumens 13 verkleinert und Luft über das Verbindungsrohr 10 in den Druckausgleichsbehälter 11 gedrückt. Die verdrängte Luft enthält Wasserdampf, da Wasserdampf aus dem warmen Latentwärmespeichermaterial 7 verdunstet. Dieser Wasserdampf kondensiert an der ungedämmten Außenwandung des Druckausgleichsbehälters 11 und sammelt sich im unteren Bereich. Beim Erstarren des Latentwärmespeichermaterial 7 zieht sich dieses zusammen, wodurch der Druck im Speicherinnenbehälter 4 sinkt und Luft aus dem Druckausgleichsbehälters 11 zurück in den Speicherinnenbehälter 4 strömt. Übersteigt der Wasserstand im Druckausgleichsbehälters 11 die Öffnung des Verbindungsrohrs 10, so wird beim Erstarren des Latentwärmespeichermaterial 7 Wasser zurück in den Speicherinnenbehälter 4 gesaugt, wo es sich wieder mit dem Latentwärmespeichermaterial 7 vermischt. Auf diese Weise entsteht ein Gleichgewicht. Im unteren Teil des Druckausgleichsbehälters 11 steht im regulären Betrieb immer flüssiges Wasser.

Der Speicherinnenbehälter 4 wird bei der Installation mit warmem flüssigem Latentwärmespeichermaterial 7 gefüllt und dann verschlossen. Das Latentwärmespeichermaterial 7 enthält einen leichten Wasserüberschuss, der im laufenden Betrieb dem Wasser 12 gefüllten Bereich des Druckausgleichsbehälters 11 entspricht. Der Druckausgleichsbehälters 11 selbst wird bei der Installation nicht mit Wasser gefüllt. Nach der Befüllung wird der integrierte Wärmetauscher 5 auf seine maximale Temperatur aufgeheizt. Es entsteht ein Überdruck im Speicherinnenbehälter 4 sowie im Druckausgleichsbehälter 11, der über das zweite Rückschlagventil 16 entweicht. Bei allen anderen Betriebszuständen herrscht ab diesem Zeitpunkt immer ein Druck, der kleiner oder gleich dem Öffnungsdruck des Ventil 16 ist. Das erste Rückschlagventil 15 dient als Unterdrucksicherung; der Öffnungsdruck ist so zu wählen, dass er im Normalbetrieb nicht erreicht wird. Während des Betriebs sammelt sich Wasser 12 im Druckausgleichsbehälter 11 an. Die Menge entspricht dem Wasserüberschuss beim Befüllen.

Der Druck im Speicherinnenbehälter 4 sowie Druckausgleichsbehälters 11 wird durch die beiden Rückschlagventile 15 und 16 in vorbestimmten Grenzen gehalten. Das erste Rückschlagventil 15 schließt bei Überdruck und öffnet bei einem definierten Unterdruck im Speicherinnenbehälter 4 sowie Druckausgleichsbehälters 11. Beim Öffnen des ersten Rückschlagventils 15 gelangt Luft in das System und führt einen Druckausgleich bis zum Öffnungsdruck des ersten Rückschlagventils 15 herbei. Das zweite Rückschlagventil 16 befindet sich im Wasser 12 gefüllten Bereich des Druckausgleichsbehälters 11 und öffnet bei definiertem Überdruck, so dass Wasser in den Auffangbehälter 17 gelangen kann.

Über einen längeren Zeitraum diffundiert Wasser durch den integrierten Wärmetauscher 5 in das Latentwärmespeichermaterial 7. Das Gesamtvolumen des Latentwärmespeichermaterial 7 steigt, das Luftvolumen für den Druckausgleich sinkt hingegen. Wird der Speicher 1 auf die maximale Temperatur aufgeheizt, entsteht ein Überdruck und das zweite Rückschlagventil 16 öffnet. Das Wasser 12 im Druckausgleichsbehälter 11 läuft teilweise oder ganz in die Auffangwanne 17. Wie bereits beschrieben, steigt der Wasserstand beim weiteren Betrieb des Speichers 1 wieder auf die Höhe des Verbindungsrohrs 10 an. Das überschüssige Wasser 12 kann auf diese Weise aus dem Latentwärmespeichermaterial 7 entweichen. Durch die erfindungsgemäße Anordnung ist es möglich, eindiffundiertes Wasser aus dem Latentwärmespeichermaterial 7 auszuschleusen.

Wird im ersten Luftvolumen 13 oder im zweiten Luftvolumen 14 des Speichers 1 ein Drucksensor eingebaut, kann damit der Ladezustand ermittelt werden.

Alternativ kann der Zustand des Latentwärmespeichermaterials 7 durch geeignete Methoden ermittelt und das Ausschleusen des Wassers 12 durch einen Aktor ausgelöst werden. Eindiffundiertes Wasser kann z.B. über den Druck und Temperaturverlauf detektiert werden.

Überschusswasser führt dazu, dass das Latentwärmespeichermaterial 7 bei Unterschreiten der Schmelztemperatur nicht mehr vollständig kristallisiert. Dies kann über ein geeignetes Messverfahren direkt gemessen werden, z.B. durch Messung der Permittivität.

Für das bedarfsgesteuerte Ausschleusen des überschüssigen Wassers kann beispielsweise eine Schlauchpumpe verwendet werden. Eine weitere Möglichkeit ist es neben dem ersten Rückschlagventil 15 ein Magnetventil anzubringen, welches im erstarrten Zustand kurz öffnet und Luft einströmen lässt. Im folgenden Aufheizzyklus entsteht dann Überdruck, der das zweite Rückschlagventil 16 auslöst.

### Bezugszeichenliste

1 Speicher
2 Wärmedämmung
3 Dichtung
4 Speicherinnenbehälter
5 integrierter Wärmetauscher
6 Deckel
7 Latentwärmespeichermaterial
8 Minimalfüllstand
9 Maximalfüllstand
10 Verbindungsrohr
11 Druckausgleichsbehälter
12 Wasser
13 erstes Luftvolumen
14 zweites Luftvolumen
15 erstes Rückschlagventil
16 zweites Rückschlagventil
17 Auffangbehälter

## Patentansprüche

1. Speicher (1) mit einem Speicherinnenbehälter (4) und einem darin integrierten Wärmetauscher (5), wobei Latentwärmespeichermaterial (7) den integrierten Wärmetauscher (5) zumindest teilweise umgibt, wobei das Latentwärmespeichermaterial 7 ein Salzhydrat oder ein sonstiges wasserbasiertes Stoffsystem ist, und einem ersten Luftvolumen (13) oberhalb des Latentwärmespeichermaterials (7),
wobei neben dem Speicher (1) ein Druckausgleichsbehälter (11) angeordnet und über ein Verbindungsrohr (10) mit dem ersten Luftvolumen (13) verbunden ist, **dadurch gekennzeichnet, dass** das Verbindungsrohr (10) im Druckausgleichsbehälter (11) nach unten führt und in einem Abstand oberhalb des Bodens endet.

2. Speicher (1) nach Anspruch 1, **dadurch gekennzeichnet, dass** der Druckausgleichsbehälter (11) ungedämmt ist.

3. Speicher (1) nach Anspruch 1 oder 2, **dadurch gekennzeichnet, dass** sich am Kopf des Druckausgleichsbehälters (11) ein erstes Rückschlagventil (15) befindet.

4. Speicher (1) nach einem der Ansprüche 1 bis 3, **dadurch gekennzeichnet, dass** sich am Boden des Druckausgleichsbehälters (11) sich ein zweites Rückschlagventil (16) befindet.

5. Speicher (1) nach einem der Ansprüche 1 bis 4, **dadurch gekennzeichnet, dass** der Speicher (1) von einem mittels Dichtung (3) abgedichteten Deckel (6) verschlossen ist.

6. Speicher (1) nach einem der Ansprüche 1 bis 4, **dadurch gekennzeichnet, dass** der Speicher (1) eine umlaufende Wärmedämmung (2) besitzt.

## Claims

1. Reservoir (1) having a reservoir inner container (4) and a heat exchanger (5) integrated therein, wherein latent heat reservoir material (7) at least partially surrounds the integrated heat exchanger (5), wherein the latent heat reservoir material 7 is a salt hydrate or another water-based material system, and a first air volume (13) above the latent heat reservoir material (7),
wherein next to the reservoir (1) is arranged a pressure equalisation container (11) which is connected via a connecting tube (10) with the first air volume (13), **characterised in that** the connecting tube (10) in the pressure equalisation container (11) leads downwards and ends at a distance above the base.

2. Reservoir (1) according to claim 1, **characterised in that** the pressure equalisation container (11) is uninsulated.

3. Reservoir (1) according to claim 1 or 2, **characterised in that** at the head of the pressure equalisation container (11) is located a first non-return valve (15).

4. Reservoir (1) according to any of claims 1 to 3, **characterised in that** at the base of the pressure equalisation container (11) is located a second non-return valve (16).

5. Reservoir (1) according to any of claims 1 to 4, **characterised in that** the reservoir (1) is closed by a lid (6) sealed by means of a seal (3).

6. Reservoir (1) according to any of claims 1 to 4, **characterised in that** the reservoir (1) has a surrounding thermal insulation (2).

## Revendications

1. Accumulateur (1) comportant un bac interne d'accumulateur (4) et un échangeur de chaleur (5) qui y est intégré, dans lequel un matériau accumulateur thermique latent (7) entoure au moins en partie l'échangeur de chaleur (5) intégré, dans lequel le matériau accumulateur thermique latent 7 est un hydrate de sel ou un autre système de substances à base d'eau et un premier volume d'air (13) au-dessus du matériau accumulateur thermique latent (7),
dans lequel on agence à côté de l'accumulateur (1) un bac d'équilibrage de pression (11), qui via un tube de raccordement (10) est raccordé au premier volume d'air (13), **caractérisé en ce que** le tube de raccordement (10) mène vers le bas dans le bac d'équilibrage de pression (11) et se termine dans un intervalle au-dessus du fond.

2. Accumulateur (1) selon la revendication 1, **caractérisé en ce que** le bac d'équilibrage de pression (11) n'est pas isolé.

3. Accumulateur (1) selon la revendication 1 ou 2, **caractérisé en ce qu'**un premier clapet antiretour (15) se trouve sur la tête du bac d'équilibrage de pression (11).

4. Accumulateur (1) selon l'une quelconque des revendications 1 à 3, **caractérisé en ce qu'**un second clapet antiretour (16) se trouve sur le fond du bac d'équilibrage de pression (11).

5. Accumulateur (1) selon l'une quelconque des revendications 1 à 4, **caractérisé en ce que** l'accumulateur (1) est fermé par un couvercle (6) étanché au moyen d'un joint étanche (3).

6. Accumulateur (1) selon l'une quelconque des revendications 1 à 4, **caractérisé en ce que** l'accumulateur (1) possède une isolation thermique périphérique (2).
